# EUROPÄISCHE PATENTANMELDUNG

(11) **EP 1 983 634 A2**
(43) Veröffentlichungstag der Anmeldung: **22.10.2008**
(21) Anmeldenummer: 08004341.7
(22) Anmeldetag: 10.03.2008
(51) Int. Cl.: H02K 1/27, H02K 1/28

(54) **Rotor, insbesondere für einen Elektromotor einer Umwälzpumpe**

(30) Priorität: 27.03.2007 DE 102007015249
(71) Anmelder: Miele & Cie. KG, 33332 Gütersloh (DE)
(72) Erfinder: Esch, Günter, 53937 Schleiden (DE); Merten, Hans Peter, 53520 Senscheid (DE); Ohlerth, Helmut, 53902 Bad Münstereifel (DE); Rode, Peter, Dr., 53881 Euskirchen (DE)

(57) **Zusammenfassung**

Rotor (1), insbesondere für einen Elektromotor einer Umwälzpumpe, mit einem an einer Welle (3) montierbaren Rotorpaket (2), an dem umlaufend mehrere Taschen (14) ausgebildet sind, in die jeweils ein Magnet (5) eingefügt ist, wobei an jeder Tasche (14) mindestens eine sich parallel zur Welle (3) erstreckende Nut (15) vorgesehen ist, in die jeweils mindestens ein Klemmelement (6) zur Fixierung des jeweiligen Magneten (5) in der Tasche (14) eingefügt ist. Es sind mehrere Klemmelemente (6) an einem gemeinsamen Halteelement (4) vorgesehen und das Halteelement (4) ist im Wesentlichen plattenförmig ausgebildet und weist eine Öffnung zur Durchführung der Welle (3) auf. Hierdurch ist der Rotor (1) einfach aufgebaut.

## Beschreibung

Die vorliegende Erfindung betrifft einen Rotor, insbesondere für einen Elektromotor einer Umwälzpumpe, mit einem an einer Welle montierbaren Rotorpaket, an dem umlaufend mehrere Taschen ausgebildet sind, in die jeweils ein Magnet eingefügt ist, wobei an jeder Tasche mindestens eine sich parallel zur Welle erstreckende Nut vorgesehen ist, in die jeweils mindestens ein Klemmelement zur Fixierung des jeweiligen Magneten in der Tasche eingefügt ist.

Es ist bekannt, an einem Rotor Magnete außen oder in Taschen zu verkleben, um eine dauerhafte Verbindung zwischen Rotor und dem Permanentmagneten bereitzustellen. Wichtig dabei ist, dass ein günstiges Unwuchtverhalten erreicht wird, da die Taschengeometrie für die Magnete bestimmten Toleranzen unterliegt und der Klebespalt daher variieren kann. Es besteht die Vorgabe, beim Kleben die Magnete in eine definierte Position zu bringen, um die auftretende Unwucht im Betrieb zu minimieren. Zudem sollen die Magnete gegen mechanische Beschädigungen geschützt sein. Es ist auch möglich, die Magnete in einem Kunststoffbauteil zu umspritzen. Dies ist jedoch in der Herstellung vergleichsweise aufwendig, da die Magnete positioniert gehalten werden müssen um dann in das Kunststoffmaterial eingebettet zu werden.

Aus der GB 2 075 274 A ist ein Rotor mit Permanentmagneten bekannt, bei dem eine Vielzahl von Rotorelementen sternförmig angeordnete Magnete zwischen sich festlegen. Ein solcher Rotor besteht aus einer Vielzahl von Einzelteilen und ist daher ebenfalls schwierig zu montieren.

Gattungsgemäße Rotoren sind beispielsweise aus der WO 2007/004009 A2, aus der JP 2000 17 53 88 AA, aus der JP 2000 34 19 20 AA und aus der JP 2004 35 74 18 AA bekannt. Dort sind die Taschen zur Aufnahme der Magnete um Nuten erweitert, welche sich parallel zur Welle erstrecken. In die Taschen werden bügelförmige Federelemente gesteckt, um die Magnete in ihren Positionen zu halten.

Es ist daher Aufgabe der vorliegenden Erfindung einen Rotor zu schaffen, der einfach aufgebaut ist.

Diese Aufgabe wird mit einem Rotor mit den Merkmalen des Anspruches 1 gelöst.

Erfindungsgemäß sind mehrere Klemmelemente an einem gemeinsamen Halteelement vorgesehen und das Halteelement ist im Wesentlichen platten- bzw. scheibenförmig ausgebildet und weist eine Öffnung zur Durchführung der Welle auf. Dadurch können mehrere Magnete gleichzeitig fixiert werden, wenn das Halteelement mit den mehreren Klemmelementen an dem Rotorpaket befestigt wird. Dies verringert auch die Anzahl der notwendigen Bauteile zur Bereitstellung eines erfindungsgemäßen Rotors und es kann über das Halteelement das Rotorpaket stirnseitig abgedeckt werden, insbesondere können die Öffnungen für die Magnete zumindest teilweise verschlossen werden.

Vorzugsweise sind die Taschen und die Nut in eine Richtung parallel zur Längsachse der Welle durchgängig in dem Rotorpaket ausgebildet. Dadurch kann das Einschieben der Magnete von gegenüberliegenden Richtungen aus erfolgen.

An dem Halteelement können dabei mehrere zur Welle ausgerichtete Klemmelemente angeformt sein, die jeweils in eine Richtung senkrecht zur Nut eine gewisse Elastizität und/oder Federkraft aufweisen. Dadurch kann durch Einschieben der Klemmelemente ein Anpressen der Magnete innerhalb der Tasche erfolgen. Die Klemmelemente können dabei jeweils als Zapfen ausgebildet sein, die zur Erhöhung der Federkraft ein Langloch oder einen Schlitz aufweisen.

Für einen symmetrischen Aufbau ist an gegenüberliegenden Seiten des Rotorpaketes jeweils ein Halteelement vorgesehen. Dann erfolgt die Festlegung der Magnete jeweils durch zwei Klemmelemente, die von gegenüberliegenden Seiten in die Nut eingefügt sind.

Gemäß einer weiteren Ausgestaltung der Erfindung ist in einem mittigen Bereich einer Nut jeweils Kleber zur Festlegung der Magnete vorgesehen. Dadurch wird neben der klemmenden Festlegung auch eine Klebeverbindung für eine möglichst dauerhafte Befestigung der Magnete vorgesehen.

Die Magnete sind vorzugsweise plattenförmig als Blockmagnete ausgebildet, die kostengünstig herstellbar sind. Zudem können als Magnete Seltenerdmagnete verwendet werden.

Die Erfindung wird nachfolgend anhand eines Ausführungsbeispieles mit Bezug auf die beigefügten Zeichnungen näher erläutert. Es zeigen:

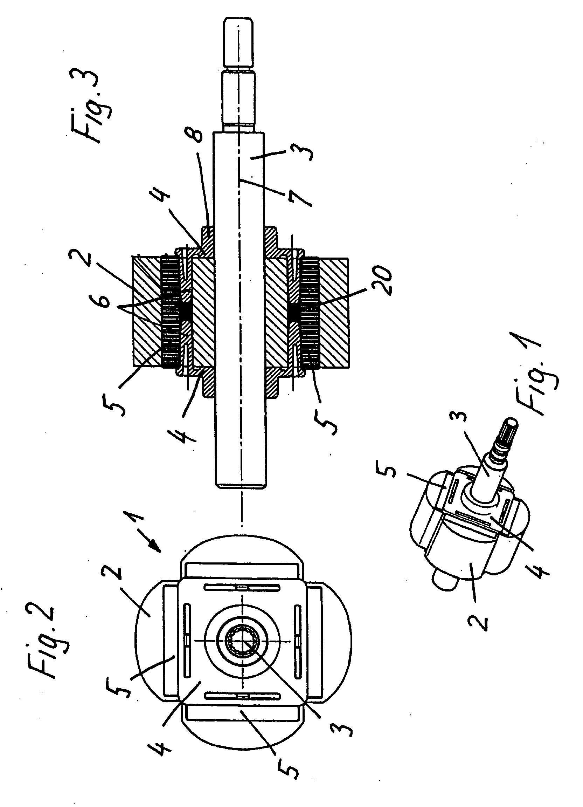

- Figur 1: eine perspektivische Ansicht eines erfindungsgemäßen Rotors;
- Figur 2: eine Vorderansicht des Rotors der Figur 1;
- Figur 3: eine geschnittene Seitenansicht des Rotors der Figur 1;

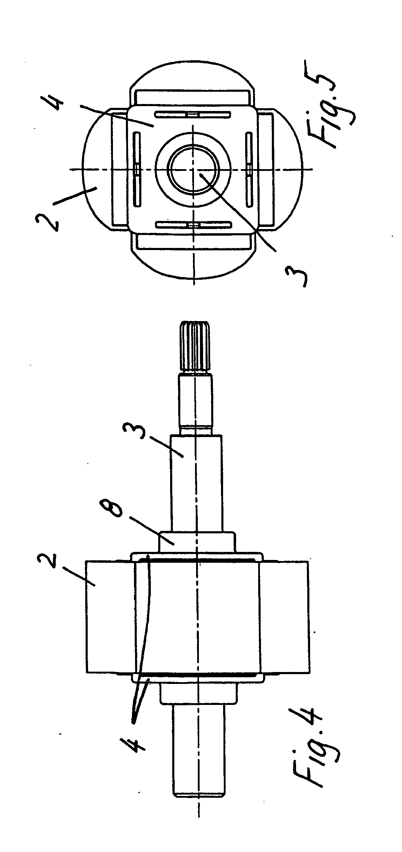

- Figur 4: eine Seitenansicht des Rotors der Figur 1;
- Figur 5: eine Rückansicht des Rotors der Figur 1;
- Figur 6A, 6B: zwei perspektivische Ansichten eines Halteelementes für den Rotor der Figur 1 und
- Figur 7A, 7B: zwei Ansichten des Rotorpaketes des Rotors der Figur 1.

Ein Rotor 1 für einen permanentmagneterregten Motor, insbesondere für einen Elektromotor einer Umwälzpumpe umfasst ein Rotorpaket 2 durch das eine Welle 3 geführt ist. Die Welle 3 kann gestuft ausgebildet sein und mit einem Getriebe oder einem anzutreibenden Bauteil verbunden werden.

An gegenüberliegenden Seiten des Rotorpaketes 2 ist jeweils ein Halteelement 4 vorgesehen, das im Wesentlichen plattenförmig oder scheibenförmig ausgebildet ist und eine Buchse 8 aufweist, durch die die Welle 3 durchgeführt ist.

In dem Rotorpaket 2 sind vier Taschen ausgespart, die durchgängig ausgebildet sind und in denen jeweils ein Magnet 5, vorzugsweise ein Permanentmagnet, insbesondere ein Seltenerdmagnet eingefügt ist. Der Magnet 5 besitzt im Wesentlichen dieselbe Breite wie das Rotorpaket 2 und ist in den Taschen lagefixiert gehalten. Hierfür sind zapfenförmige Klemmelemente 6 vorgesehen, die benachbart zu dem Magnet 5 in das Rotorpaket 2 eingefügt sind und diesen klemmend nach außen gegen das Rotorpaket 2 drücken. Dabei sind an jedem Halteelement 4 vier Klemmelemente 6 angeformt. Die Klemmelemente 6 erstrecken sich bis zu einem mittleren Bereich des Rotorpaketes 2, wobei die von gegenüberliegenden Seiten eingeführten Klemmelemente 6 nicht aneinander anstoßen sondern einen Zwischenraum vorsehen, in dem Kleber 20 eingefügt ist. Dadurch werden die Magnete 5 nicht nur durch die Klemmelemente 6 sondern auch durch den Kleber 20 in dem Rotorpaket 2 fixiert. Die Klemmelemente 6 erstrecken sich dabei parallel zu einer Längsachse 7 der Welle 3.

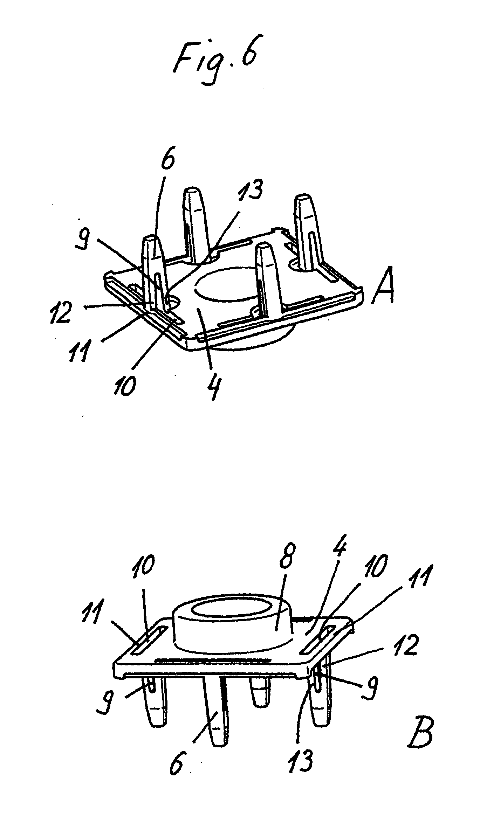

In den Figuren 6A und 6B ist das Halteelement 4 im Detail dargestellt, das einstückig aus Kunststoff hergestellt ist. Von dem im Wesentlichen plattenförmigen Halteelement 4 erstrecken sich vier Klemmelemente 6 hervor, die federnd und/oder elastisch ausgebildet sind. Hierfür weist jedes Klemmelement 6 ein Langloch 9 auf, das sich etwas über die Hälfte der Länge des Zapfens des Klemmelementes 6 erstreckt. Das Klemmelement 6 ist dabei leicht keilförmig aufspreizend ausgebildet, so dass insbesondere im Bereich des Langloches 9 eine Federkraft zum Festklemmen der Magnete 5 gegeben ist. Ferner ist an dem Halteelement 4 ein Langloch 10 ausgebildet, so dass jedes Klemmelement 6 zwei gegenüberliegende Schenkel 12 und 13 aufweist, die durch das Langloch 9 getrennt sind, das in das Langloch 10 mündet. Dadurch ist der äußere Schenkel 12 an einem Stegabschnitt 11 gehalten, der dafür sorgt, dass der Schenkel 12 federnd bewegbar ist.

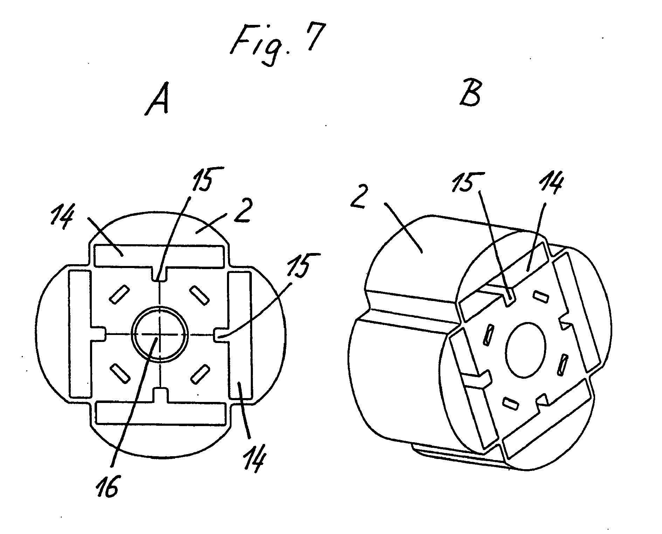

In den Figuren 7A und 7B ist das Rotorpaket 2 dargestellt, das in bekannter Weise als Blechpaket aus Einzelblechen hergestellt ist. In dem Rotorpaket 2 sind vier Taschen 14 ausgebildet, die jeweils an ihrer nach innen gerichteten Seite eine Nut 15 aufweisen. Das Rotorpaket 2 weist mittig eine Durchführung 16 für die Welle 3 auf, so dass das Rotorpaket 2 auf die Welle 3 aufgeschoben werden kann.

Für die Montage werden die Magnete 5 in die Taschen 14 eingefügt und an einer Seite ein Halteelement 4 auf die Welle 3 aufgeschoben, so dass durch Einfügen der Klemmelemente 6 in die Nut 15 die Magnete 5 nach außen gedrückt werden und somit lagefixiert sind. Es besteht auch die Möglichkeit, zuerst ein Halteelement 4 zu positionieren und anschließend die Magnete 5 einzustecken. Anschließend wird in die Nut ein Kleber 20 eingefüllt. Dabei wird das Rotorpaket 2 so positioniert, dass das bereits montierte Halteelement 4 nach unten zeigt und dadurch die Klemmelemente 6 die Nuten 15 nach unten abdichten. Der Kleber 20 steht dann in den Nuten 15. Dann wird das zweite Halteelement 4 auf die Welle 3 aufgeschoben, bis die Klemmelemente 6 in die Nuten 15 eingreifen und die Magnete 5 nun durch jeweils zwei Klemmelemente 6 nach außen gedrückt werden. Die von oben eingeschobenen Klemmelemente 6 verdrängen den Kleber 20 und sorgen dafür, dass dieser sich über den gesamten Zwischenraum, der zwischen der Innenfläche der Magneten 5 und den an die Nuten 15 angrenzenden Bereiche der Taschen 14 verteilt. Hierdurch sorgt der Kleber 20 für eine dauerhafte Fixierung, wenn die Elastizität und die Federkraft der Klemmelemente 6 nachlässt.

In dem dargestellten Ausführungsbeispiel ist an jeder Tasche 14 nur eine an der Innenseite ausgebildete Nut 15 vorgesehen. Es ist natürlich auch möglich, mehrere Nuten 15 an jeder Tasche 14 vorzusehen. Zudem kann die Nut 15 statt an der Innenseite auch an der Außenseite der Tasche 14 vorgesehen sein, so dass das Halteelement 4 die stirnseitige Öffnung der Taschen 14 vollständig überdeckt. Die Nut 15 kann sich zudem auch nur über einen Teil der Breite der Tasche 14 erstrecken.

In dem gezeigten Ausführungsbeispiel wird von gegenüberliegenden Seiten jeweils ein Halteelement 4 montiert. Es ist natürlich auch möglich, die Klemmelemente 6 länger auszubilden und die Magnete 5 über ein längeres Klemmelement 6 zu fixieren.

## Patentansprüche

1. Rotor (1), insbesondere für einen Elektromotor einer Umwälzpumpe, mit einem an einer Welle (3) montierbaren Rotorpaket (2), an dem umlaufend mehrere Taschen (14) ausgebildet sind, in die jeweils ein Magnet (5) eingefügt ist, wobei an jeder Tasche (14) mindestens eine sich parallel zur Welle (3) erstreckende Nut (15) vorgesehen ist, in die jeweils mindestens ein Klemmelement (6) zur Fixierung des jeweiligen Magneten (5) in der Tasche (14) eingefügt ist,
**dadurch gekennzeichnet,**
**dass** mehrere Klemmelemente (6) an einem gemeinsamen Halteelement (4) vorgesehen sind und dass das Halteelement (4) im Wesentlichen plattenförmig ausgebildet ist und eine Öffnung zur Durchführung der Welle (3) aufweist.

2. Rotor nach Anspruch 1,
**dadurch gekennzeichnet,**
**dass** die Taschen (14) und die Nuten (15) in eine Richtung parallel zur Längsachse (7) der Welle (3) durchgängig in dem Rotorpaket (2) ausgebildet sind.

3. Rotor nach Anspruch 2,
**dadurch gekennzeichnet,**
**dass** an den Haltelementen (4) mehrere parallel zur Welle (3) ausgerichtete Klemmelemente (6) angeformt sind, die jeweils in eine Richtung senkrecht zur Nut (15) eine gewisse Elastizität und/oder Federkraft aufweisen.

4. Rotor nach einem der Ansprüche 1 bis 3,
**dadurch gekennzeichnet,**
**dass** die Klemmelemente (6) jeweils als Zapfen ausgebildet sind, die zur Erhöhung der Federkraft ein Langloch (9) oder einen Schlitz aufweisen.

5. Rotor nach einem der Ansprüche 1 bis 4,
**dadurch gekennzeichnet,**
**dass** an gegenüberliegenden Seiten des Rotorpakets (2) jeweils ein Halteelement (4) vorgesehen ist.

6. Rotor nach einem der Ansprüche 1 bis 5,
**dadurch gekennzeichnet,**
**dass** das Rotorpaket (4) vier Taschen (14) mit je einem Magneten (5) aufweist.

7. Rotor nach einem der Ansprüche 1 bis 6,
**dadurch gekennzeichnet,**
**dass** in einem mittigen Bereich einer Nut (15) jeweils Kleber (20) zur Festlegung des Magneten (5) vorgesehen ist.

8. Rotor nach einem der Ansprüche 1 bis 7,
**dadurch gekennzeichnet,**
**dass** die Magnete (5) plattenförmig ausgebildet sind und die Plattenebene parallel zum Boden der Nut (15) einer Tasche (14) ausgerichtet ist.

9. Rotor nach einem der Ansprüche 1 bis 8,
**dadurch gekennzeichnet,**
**dass** die Magnete (5) als Seltenerdmagnete ausgebildet sind.
